# EUROPEAN PATENT APPLICATION

(11) **EP 3 972 077 A2**
(43) Date of publication of application: **23.03.2022**
(21) Application number: 21194605.8
(22) Date of filing: 02.09.2021
(51) Int. Cl.: H02J 7/00, G06F 1/16

(54) **BATTERY CHARGER AND CHARGER DOCK USED WITH THE SAME**

(30) Priority: 18.09.2020 HK 32020016516
(71) Applicant: GP Batteries International Limited, 138543 Singapore (SG)
(72) Inventor: LEE, Kwok Kit, New Territories (HK)
(74) Representative: dompatent von Kreisler Selting Werner - Partnerschaft von Patent- und Rechtsanwälten mbB

(57) **Abstract**

The present invention provides a battery charger and a charger dock used with the battery charger. The battery charger comprising a battery compartment an engagement portion extending from the battery compartment along a longitudinal axis of the battery charger and having an exterior shape conforming substantially with a cavity of the charger dock such that the engagement portion can be inserted through a direction along the longitudinal axis of the battery charger into the cavity and snuggly fitted in the cavity for anchoring the battery charger in the charger dock.

## Description

### Field of the Invention:

The invention relates to the field of battery chargers, and more particularly, to battery chargers for managing rechargeable batteries and a battery dock used with the battery chargers.

### Background of the Invention:

Rechargeable batteries in their various forms including different sizes, shapes, configurations and electrochemical types are commonly used to supply electric power for electrical appliances and devices. Among them, rechargeable battery cells such as nickel-cadmium (NiCd), nickel-metal hydride (NiMH), lithium-ion (Li-ion) and rechargeable alkaline batteries are popular among battery users, especially for their use with portable electronic devices in view of their relatively high energy density, affordability as well as the wide selection of battery sizes available.

For example, rechargeable batteries such as NiMH batteries are known to be widely used by professional photographers in relatively large quantity for powering their photographic equipment such as digital cameras, camera flash lights and flash triggers, etc. One common problem encountered by the photographers with their use of rechargeable batteries is that, in order to provide sufficient electric power for their photographic equipment during a photo-shooting event, it may generally take up to about 20-30 rechargeable batteries, and the number of the rechargeable batteries required may even increase to about 50-60 for a photo-shooting over an extended period such as, for a wedding event, for example.

It is therefore understood that it would be difficult and inconvenient for one to carry around and to manage such a large number of rechargeable batteries, let alone the need for the photographer to readily distinguish the used, flat batteries from those which are unused, i.e. new or recharged among the tens of the batteries. The separation among the used/flat and the recharged batteries is of particular importance as the use of a mixture of charged and used/flat batteries may not only reduce performance of the electric appliances, but may even cause damage to the electric appliances as well as the rechargeable batteries themselves.

It also presents a challenge for the battery users to systematically organize, store, manage and charge a large number of individual rechargeable batteries, especially if the user, such as a photographer as abovementioned, is required to travel around and be moving from place to place.

### Summary of the Invention:

An object of the invention is to provide a novel solution for one to manage, store and/or recharge one or more rechargeable batteries and check status thereof.

A further object of the invention is to mitigate or obviate to some degree one or more problems associated with known means for storing and/or recharging rechargeable batteries, or at least to provide a useful alternative.

One skilled in the art will derive from the following description other objects of the invention. Therefore, the foregoing statements of object are not exhaustive and serve merely to illustrate some of the many objects of the present invention.

In a first aspect, the invention provides a battery charger comprising a battery compartment for accommodating one or more rechargeable batteries; and an engagement portion extending from the battery compartment along a longitudinal axis of the battery charger and having an exterior shape conforming substantially with a cavity of a charger dock such that the engagement portion can be inserted through a direction along the longitudinal axis of the battery charger into the cavity and snuggly fitted in the cavity for anchoring the battery charger in the charger dock.

In a second main aspect, the invention provides a charger dock comprising one or more cavities configured to conform in shape with respective engagement portions of one or more battery chargers for snuggly receiving the battery chargers to perform electric charging and/or checking status of one or more rechargeable batteries accommodated in the received battery chargers.

### Brief Description of the Drawings:

Preferred embodiments of the invention are described in more detail hereinafter with reference to the drawings, in which:
Figure 1 depicts a top perspective view of an embodiment of a battery charger with its battery compartment in a close configuration in accordance with the present invention;
Figure 2 depicts a top perspective view of the battery charger of Figure 1 with its cover portion being sliding between a close and an open configuration;
Figure 3 depicts a top perspective view of the battery charger of Figure 1 with its battery compartment in an open configuration;
Figure 4 depicts a bottom perspective view of the battery charger of Figure 1;
Figure 5 depicts how the battery charger of Figure 1 is received in a charger dock in accordance with the present invention;
Figure 6 depicts a closeup view of an interlocking member of the battery charger of Figure 1;
Figure 7 depicts a functional block diagram of the battery charger of Figure 1;
Figure 8 depicts a perspective view of an embodiment of a charger dock in accordance with the present invention;
Figures 9A and 9B depict the charger dock of Figure 8 before and after receiving a battery charger of Figure 1 respectively;
Figure 10 which depicts a closeup view of an interlocking member of the charger dock of Figure 8;
Figure 11 depicts a functional block diagram of the charger dock of Figure 8;
Figure 12 depicts a perspective view of another embodiment of a charger dock in accordance with the present invention;
Figures 13A and 13B depict the charger dock of Figure 12 before and after receiving a plurality of battery chargers of Figure 1 respectively; and
Figure 14 depicts a functional block diagram of the charger dock of Figure 12.

### Detailed Description:

In the following description, embodiments of battery chargers and charger docks are set forth as preferred examples. It will be apparent to those skilled in the art that modifications, including additions and/or substitutions may be made without departing from the scope and spirit of the invention. Specific details may be omitted so as not to obscure the invention; however, the disclosure is written to enable one skilled in the art to practice the teachings herein without undue experimentation.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some but not other embodiments.

The battery charger provided by the present invention can be used to store, manage one or more rechargeable batteries and check status thereof, as well as to facilitate charging or recharging of the one or more rechargeable batteries. The batteries can be of any known types such as, but are not limited to, nickel-cadmium (NiCd) batteries, nickel-metal hydride (NiMH) batteries, lithium-ion (Li-ion) batteries, rechargeable alkaline batteries or the like. Despite the references to "rechargeable batteries" in certain embodiments herein described, it is readily understood that the battery charger 10 may also be applicable for storing, managing and/or organizing any other types of battery other than a rechargeable battery, such as non-rechargeable, primary batteries which are generally designed to be used once and be discarded after use. The present invention therefore shall not be limited to its use with rechargeable batteries only.

It will also be appreciated by a skilled person in the relevant art that the present invention shall not be restricted to batteries or rechargeable batteries of any specific shapes, sizes and/or electrochemical types. Particularly, although the use of the battery charger 10 with cylindrical batteries in AA and AAA cell sizes are illustrated and described, any corresponding variations to the size, shape and configuration of the battery charger 10 for receiving and accommodating other battery types such a prismatic battery and/or a C or D size cylindrical battery, etc. shall also be encompassed.

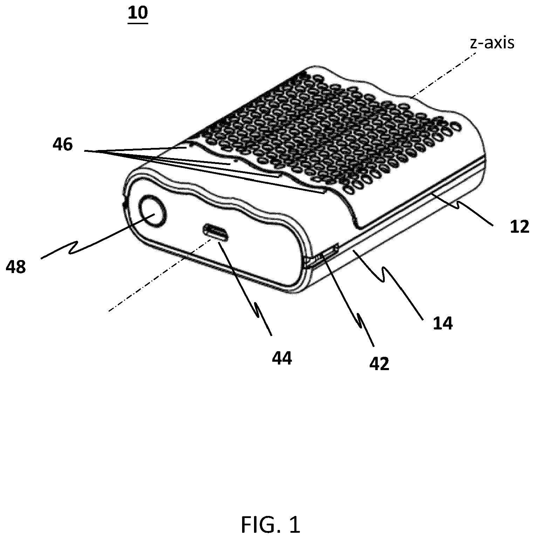

Figures 1-3 depict perspective views of an embodiment of a battery charger in accordance with the present invention. The battery charger 10 may comprise a battery compartment 12 for accommodating one or more rechargeable batteries; and an engagement portion 14 extending from the battery compartment along a longitudinal axis (z-axis) of the battery charger.

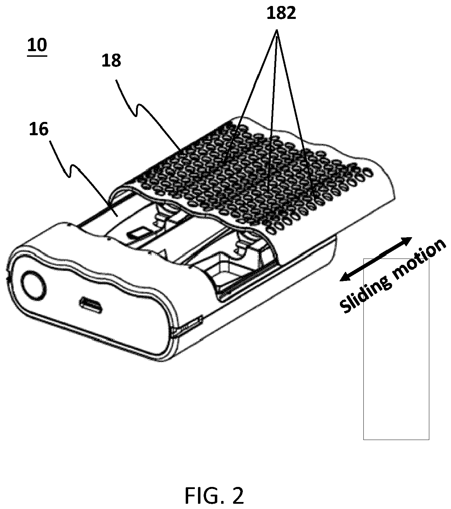

Referring to Figure 2. The battery compartment 12 may have a base portion 16 for receiving one or more rechargeable batteries and a cover portion 18 movably connected with the base portion 16. The cover portion 18 may optionally comprise one or more apertures and/or air passageways 182 for heat dissipation when the received batteries are under charging and/or discharging, for example. The cover portion 18 may also be provided with a locking means (not shown) for locking the cover portion 18 with the base portion 16 when the cover portion is at its close configuration.

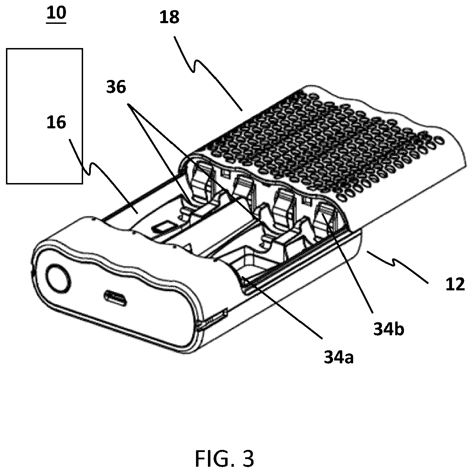

The cover portion 18 may be configured such that it is movable between a close configuration and an open configuration relative to the base portion 16 to thereby open and close the compartment 12. Optionally, the cover portion 18 is slidably connected with the base portion 16 to allow the compartment 12 be opened and closed via a sliding motion of the cover portion 18 relative to the base portion 16 as shown in Figure 2 such that it is movable between a close configuration as shown in Figure 1 and an open configuration as shown in Figure 3 relative to the base portion 16. It will be readily understandable that any other movable connections between the base portion 16 and the cover portion 18, such as via one or more hinge joints, for example, shall also be encompassed by the present invention.

Referring to Figure 3. The battery compartment 12 may further comprise one or more pairs of contact portions 34a and 34b configured to allow electric connection of the one or more received rechargeable batteries to the battery charger. Preferably, the contact portions 34a and 34b may be oppositely arranged at two facing side walls of the compartment 12 and configured to be in contact with positive and negative electrodes of corresponding received cylindrical type rechargeable batteries. It will be readily understandable that the contact portions 34a and 34b may also be arranged at a single side wall and configured to facilitate electric connection of rechargeable batteries with positive and negative electrodes on the same side.

Preferably, the contact portions 34a and 34b are arranged to be in alignment, such as being aligned along each of the two facing side walls of the base portion 16 in forming, for example, four opposing pairs as shown in the figures, such that when four rechargeable batteries are received and are positioned in the compartment 12, the batteries are aligned in parallel with one another with the electrodes being arranged to contact and electrically connect to the corresponding contact portions 34a and 34b.

The contact portions 34a and 34b may optionally be provided at an extendable platform 36 to allow adjustability of the distance between the two opposite contact portions sets 34a and 34b so as to customize the battery compartment for receiving different sized batteries.

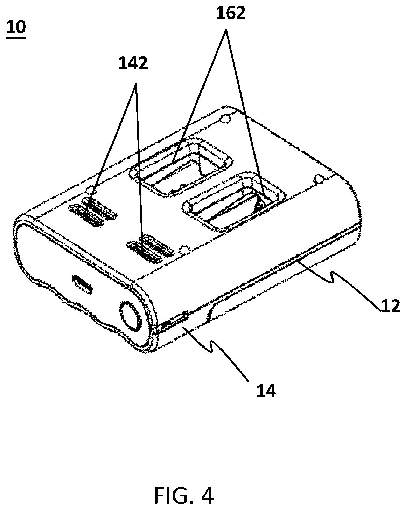

Referring to Figure 4. The base portion 16 may optionally comprise one or more ventilation holes and/or air passageways 162 for heat dissipation when the received batteries are under charging and/or discharging, for example. The engagement portion 14 may also optionally comprise one or more ventilation holes and/or air passageways 142 at its base for heat dissipation.

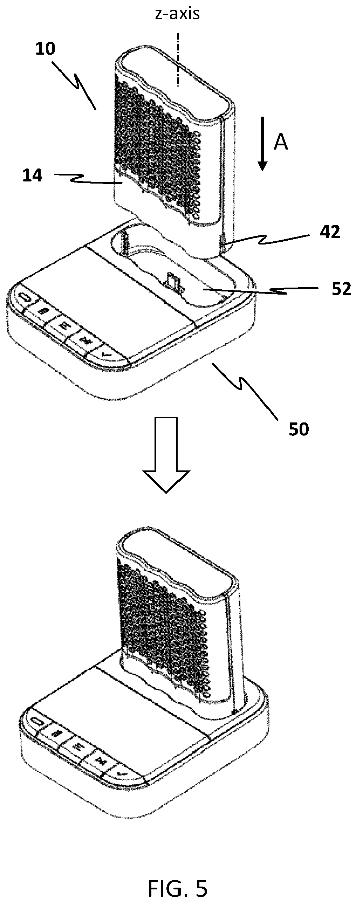

Referring to Figure 5. The engagement portion 14 may preferably have an exterior shape conforming substantially with a cavity 52 of a charger dock 50 such that the engagement portion 14 can be inserted through a direction A along the longitudinal axis of the battery charger into the cavity and snuggly fitted in the cavity for anchoring the battery charger in the charger dock.

The engagement portion 14 may preferably comprise one or more interlocking members 42 configured to be engageable with one or more interlocking members of the cavity of the charger dock for preventing movement of the battery charger inside the cavity of the charger dock.

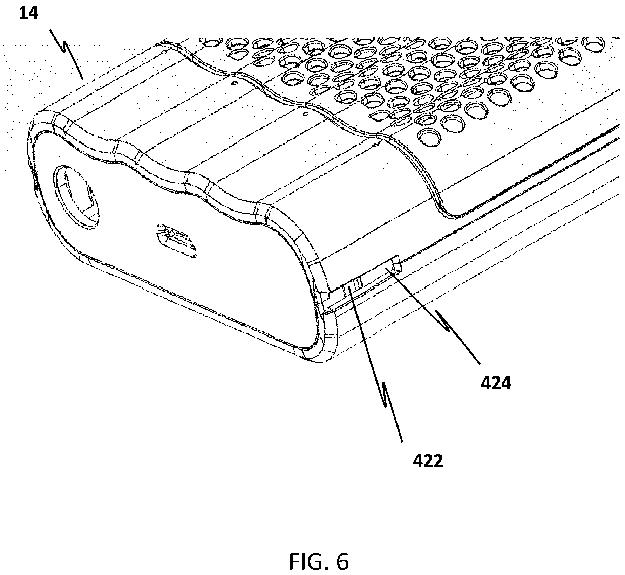

Referring to Figure 6 which depicts a closeup view of the interlocking member 42. The interlocking members 42 may have a recessing feature 422 arranged on an exterior wall of the engagement portion 14 and configured to be engageable with a protruding feature positioned on an interior wall of the cavity of the charger dock.

Each of the interlocking members 42 may optionally have a groove 424 extending along the longitudinal axis of the battery charger for guiding the protruding feature to engage with the recessing feature when the engagement portion 14 of the battery charger is inserted in the cavity of the charger dock.

It will be readily understandable that other interlocking mechanisms between the engagement portion 14 of the battery charger and the cavity 52 of the charger dock 50 shall also be encompassed by the present invention. For example, the interlocking members 42 may have one or more protruding features arranged on exterior walls of the engagement portion 14 and configured to be engageable with one or more recessing feature positioned on interior walls of the cavity of the charger dock.

Referring back to Figure 1. The engagement portion 14 may preferably further comprise an interfacing port 44 arranged at an exterior end surface which is configured to be facing an interior bottom surface of a cavity of a charger dock when the battery charger is received in the charger dock. The interfacing port 44 may be configured to have an insertion direction along the longitudinal axis (z-axis) of the battery charger and be couplable to an interfacing port at the cavity of the charger dock for receiving power from and exchanging data with the charger dock.

The interfacing port 44 at the engagement portion 14 a universal serial bus (USB) socket, a micro USB socket, a USB type-C socket, a Lightning socket such as a micro USB socket, a USB type-C socket, an Apple Lightning socket or any other types of female power and data interfacing ports. In one embodiment, the interfacing port 44 may be configured to act as a power inlet to allow the batteries accommodated in the battery charger to be charged with a standard DC power supply, for example. In another embodiment, the interfacing port 44 may be configured to as a power outlet to allow the battery charger to be utilized as a portable power bank, for example.

The battery charger 10 may preferably further comprise one or more indicators 46 arranged correspondingly adjacent to battery compartment 12 for indicating charging conditions and/or capacity conditions of the one or more corresponding rechargeable batteries accommodated in the battery charger; and a switch 48 arranged adjacent to the indicators 46.

In one embodiment, the one or more indicators 46 may be one or more LED indicators controllable to emit light with different colors and flashing rates for representing different charging conditions and/or battery capacity conditions. For example, the LED indicator may be controlled to emit a continuous-wave light or a pulsed light with high contrasting colors e.g. green and red which can be readily viewable and distinguishable by a user.

For example, each of the LED indicators may be controlled to emit a pulsed green light with a normal flashing rate to indicate that the corresponding battery is being charged; a pulsed red light with a rapid flashing rate to indicate that the corresponding battery is a bad or single-use battery which cannot be charged; or a continuous-wave green light to indicate that the charging of the corresponding battery is completed.

In another embodiment, each of the LED indicators may be controlled to emit a continuous-wave green light to indicate that the corresponding accommodated battery is ready to use; or a continuous-wave red light to indicate that the corresponding accommodated battery is needed to be recharged.

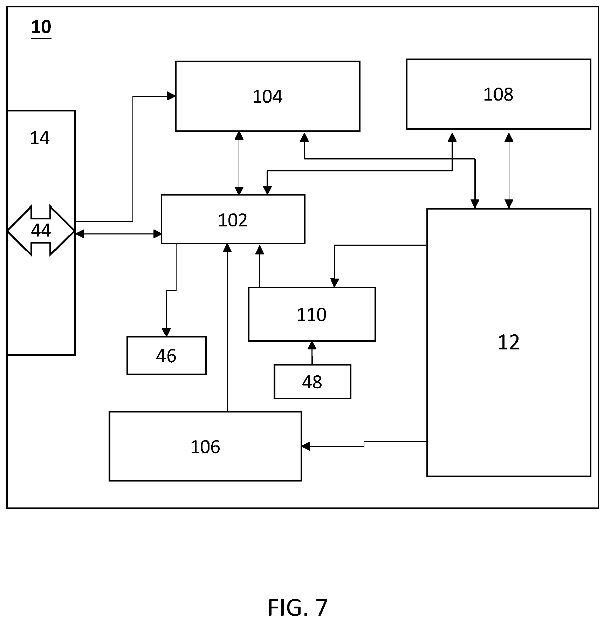

Referring to Figure 7 which depicts a functional block diagram of the battery charger of Figure 1. The battery charger 10 may comprise a battery charger controller 102 for controlling operation of the battery charger and communicating with a charger dock. The battery charger may be operated at a standalone mode in which the battery charger is configured to work with a standard power supply; or a system mode in which the battery charger is configured to work with the charger dock. At the system mode, the battery charger may be configured to perform various operation modes, including but not limited to a fast-charging mode, an eco-charging mode, a capacity-check mode, a conditioning mode, a refresh mode and a recovery mode.

Preferably, the battery charger 10 may further comprise one or more charging units 104 for charging the one or more corresponding rechargeable batteries accommodated in the battery charger; and one or more thermal sensing units 106 for sensing temperatures of the one or more corresponding accommodated rechargeable batteries; one or more discharging units 108 for checking capacities of the one or more corresponding accommodated rechargeable batteries.

Preferably, the battery charger may further comprise a self-power supply unit 110 for facilitating the battery charger to be powered by the one or more batteries accommodated in the battery charger 10 such that it can perform checking capacities of the accommodated rechargeable batteries without external power source. The self-power supply unit 110 may be connected to the switch 48 such that it can be turned on/off with the switch 48.

In one embodiment, the controller 102 may be configured control the charging units 104 to charge the corresponding accommodated batteries with a fast charging current. The fast charging current may be a continuous direct current. For example, the fast charging current may be a continuous current of a value equal to 1730mA+/- 10% (for charging AA size battery) or 700mA+/- 10% (for charging AAA size battery). Alternatively, the fast charging current may be a discontinuous (pulsed) direct current based on pulse width modulation. For example, the fast charging current may be a 0.5Hz pulsed direct current with a 50% duty cycle and an amplitude equal to 865mA+/- 10 (for charging AA size battery) or 350mA+/- 10% (for charging AAA size battery).

Alternatively, the controller 102 may be configured control the charging units 104 to charge the corresponding accommodated batteries based on the temperatures of the corresponding accommodated batteries sensed by the thermal sensing units 106. In particular, the charging units 104 may be controlled to charge the corresponding accommodated batteries with the fast charging current when the sensed temperatures of the corresponding received are determined by the controller 102 to be lower than a first threshold temperature value; charge the corresponding received batteries with a reduced charging current when the sensed temperatures of corresponding accommodated batteries are determined to be equal or higher than the first threshold temperature value but lower than a second threshold temperature value; and stop charging the corresponding accommodated batteries for safety protection when the sensed temperature of the corresponding accommodated batteries are determined to be higher than the second threshold temperature value.

The reduced charging current may have a current value lower than the fast charging current. The reduced charging current may be a continuous direct current. For example, the reduced charging current may be a continuous current of a value equal to 865mA+/- 10% (for charging AA size battery) or 350mA+/- 10% (for charging AAA size battery). Alternatively, the reduced charging current may be a discontinuous (pulsed) direct current based on pulse width modulation. For example, the reduced charging current may be a 0.5Hz pulsed direct current with a 50% duty cycle and an amplitude equal to 432mA+/- 10 (for charging AA size battery) or 175mA+/- 10% (for charging AAA size battery).

In one embodiment, each of the charging units 104 may comprise a highly efficient DC to DC current converter for supplying charging current to the corresponding accommodated rechargeable battery; and a channel switch connected between the current converter and the corresponding accommodated rechargeable battery and controllable by the battery charger controller 102 to switch on/off the charging.

In one embodiment, the battery charger controller 102 may be further configured to control the charging units 104 and discharging units 108 to check capacities of corresponding batteries accommodated in the battery charger. In particular, the battery charger controller 102 may be configured to: control the charging units 104 to charge the batteries with a small charging current (e.g. 220mA+/-10%) until they are fully charged; cool down the batteries for a cool-down period (e.g. 30 min); control the discharging units 108 to discharge the batteries with a discharging current (e.g. 220mA+/-10%) until voltages of the batteries reaching a reference voltage value (e.g. 1.0V) and record discharging time intervals taken for discharging the batteries and the corresponding battery voltages against time; calculate the capacity values of the corresponding batteries by integrating the corresponding recorded battery voltages over the corresponding recorded discharging time intervals.

In one embodiment, the battery charger controller 102 may further be configured to, in response to an input signal from the switch 48 being triggered by a user, compare the corresponding recorded battery voltages of the accommodated batteries against a threshold value; determine the capacity statuses of the accommodated batteries to be a first capacity status if the recorded battery voltages are lower than the threshold value; and determine the capacity statuses of the accommodated batteries to be a second capacity status if the recorded battery voltages are equal to or higher than the threshold value.

In one embodiment, the battery charger controller 102 may further be configured to control the charging units 104 to check conditions of the accommodated batteries and fully charge the accommodated batteries if the accommodated batteries are determined to be rechargeable. In particular, the battery charger controller 102 may be configured to: control the charging units 104 to charge the batteries with a small charging current (e.g. 220mA+/-10%) and monitor battery voltages for a conditioning charge time (e.g. 3min); determine the batteries to be rechargeable if the corresponding battery voltages reach a reference voltage (e.g. 1.0V) within the conditioning charge time; determine the batteries to be nonchargeable (bad or single-use type) if the corresponding battery voltages do not reach the predefined voltage within the conditioning charge time; fully charge the corresponding batteries if they are determined to be rechargeable; control the indicator to emit a pulsed red light with a rapid flashing rate (e.g. 2.5Hz) to indicate that the corresponding batteries are bad or single-use batteries.

In one embodiment, the battery charger controller 102 may further be configured to control the charging units 104 and discharging units 108 to refresh the corresponding accommodated batteries. In particular, the battery charger controller 102 may be configured to: control the discharging units 108 to discharge the batteries with a discharging current (e.g. 220mA+/-10%) until battery voltages reaching a reference voltage value (e.g. 1.0V) and record discharging time durations taken for discharging the batteries and the corresponding battery voltages against time; calculate the capacity values of the corresponding batteries by integrating the corresponding recorded battery voltages over the corresponding recorded discharging time intervals; cool down the batteries for a cool-down period (e.g. 30 min); control the charging units 104 to fully charge the batteries with a fast charging current (e.g. 865mA+/-10%).

In one embodiment, the battery charger controller 102 may further be configured to control the charging units 104 and the discharging units 108 to recover the corresponding accommodated batteries. In particular, the battery charger controller 102 may be configured to: a) control the discharging units 108 to discharge the batteries with a discharging current (e.g. 220mA+/-10%) until battery voltages reaching a reference voltage value (e.g. 1.0V); b) cool down the batteries for a cool-down period (e.g. 30 min); c) control the charging units 104 to charge the batteries with a small charging current (e.g. 220mA+/-10%) until they are fully charged; d) cool down the batteries for the cool-down period; e) repeat aforesaid steps a) to d) for a number of cycles (e.g. 3 cycles).

The battery charger controller may further be configured to transmit determined battery capacity status data to the indicators 46 to indicate the determined capacity statuses of the accommodated batteries.

The battery charger controller may further be configured to transfer the calculated battery capacity value data via the interfacing port 44 to a charger dock having an LCD for displaying the calculated capacity values of the accommodated batteries to user.

The battery charger controller may further be configured to transmit checked condition data of the accommodated batteries to the indicators 46 to indicate the conditions of the accommodated batteries. Alternatively, the battery charger controller may further be configured to transfer the checked condition data via the interfacing port 44 to a charger dock having an LCD for displaying the checked condition of the accommodated batteries to user.

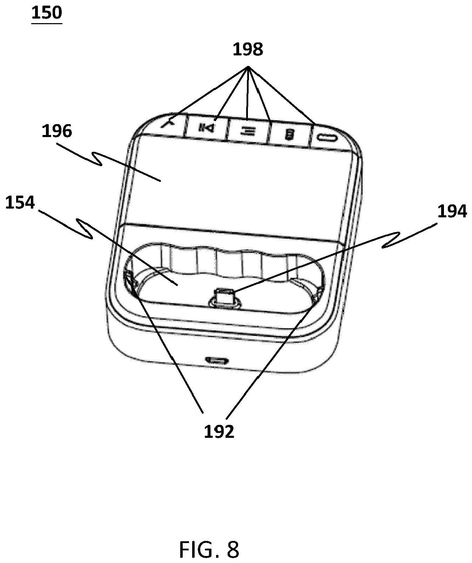

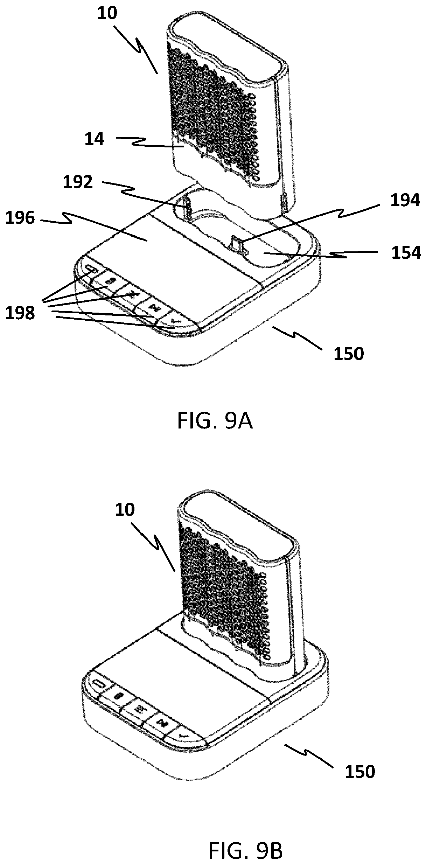

Figure 8 depicts a perspective view of an embodiment of a charger dock 150 in accordance with the present invention, and Figures 9A-9B depict the charger dock 150 before and after receiving a battery charger of Figure 1 respectively. The charger dock 150 may comprise a cavity 154 configured to conform in shape with the engagement portion 14 of the battery charger 10 for snuggly receiving the battery charger 10 to perform electric charging and/or checking status of one or more rechargeable batteries accommodated in the received battery charger.

The cavity 154 may comprise one or more interlocking members 192 configured to engageable with the one or more interlocking members 42 of the engagement portion 14 of the battery charger 10 for preventing movement of the battery charger 10 inside the cavity 154 of the charger dock 150.

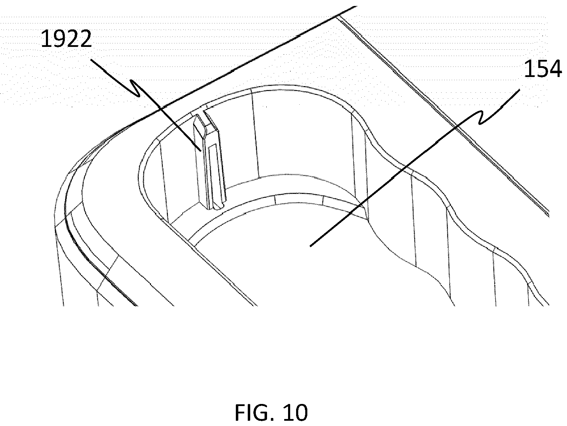

Referring to Figure 10 which depicts a closeup view of the interlocking member 192. The interlocking member 192 may comprise a protruding feature 1922 arranged on an interior wall of the cavity 154 configured to be engageable with a recessing feature positioned on an exterior wall of the engagement portion of the battery charger.

It will be readily understandable that other interlocking mechanism between the battery charger and the charger dock shall also be encompassed by the present invention. For example, the interlocking members may be one or more recessing features arranged on interior walls of the cavity of the charger dock and configured to be engageable with one or more protruding features positioned on exterior walls of the engagement portion of the battery charger.

Referring back to Figures 8 and 9A, the cavity 154 may preferably comprise an interfacing port 194 arranged at an interior bottom surface of the cavity 154 and configured to be couplable to an interfacing port of the battery charger for supplying power to and exchanging data with the battery charger.

Preferably, the interfacing port 194 of the charger dock 150 may be a micro USB plug, a USB type-C plug, a Lightning plug or any other types of male power and data interfacing ports.

The charger dock 150 may further comprise a displaying unit 196 for displaying the battery charging conditions, capacity conditions and operation setting menus; and one or more function keys 198 for facilitating a user to select and set up operation modes. The displaying unit may be a liquid crystal display (LCD), a LED display, an organic LED display or any other types of displays which can serve the displaying function in the charger dock.

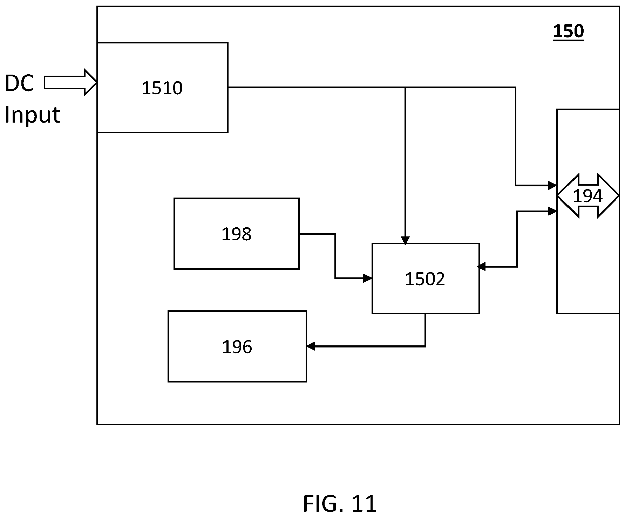

Figure 11 depicts a functional block diagram of the charger dock 150. The charger dock 50 may further comprise a charger dock controller 1502; and a power supply unit 1510 for receiving DC input and supplying regulated power to the charger dock, as well as to the battery charger via the interfacing port 194 when the battery charger is received in the charger dock.

In one embodiment, the charger dock controller 1502 may be configured to receive capacity condition data from the received battery charger via the interfacing port 194 and control the LCD 196 to display the capacity conditions of the batteries accommodated in the received battery charger. The capacity condition data may include capacity value data and capacity status data of the batteries accommodated in the corresponding received battery charger.

In one embodiment, the charger dock controller 1502 may further be configured to receive battery charger operation status data from the received battery charger via the interfacing port 194, control the LCD 196 to display operation status of the received battery charger.

In one embodiment, the charger dock controller 1502 may further be configured to receive input signals from the function keys 198 being triggered by a user, control the LCD 196 to display the operation setup menu in response to the input signals, convert the received input signals to command data, transfer the command data to the battery charger via the second interfacing port 194.

In one embodiment, the function keys 198 may comprise a first key for selecting to perform operation on all of the accommodated batteries simultaneously; a second key for selecting to perform operation on a single accommodated battery; a third key for selecting a function mode to be operated; a fourth key for pausing or resuming operation of a function mode; and a fifth key for confirming selection of a function mode. The function keys 198 are reconfigurable for selecting various functions according to different operation modes of the charger dock and the charger received in the charger dock.

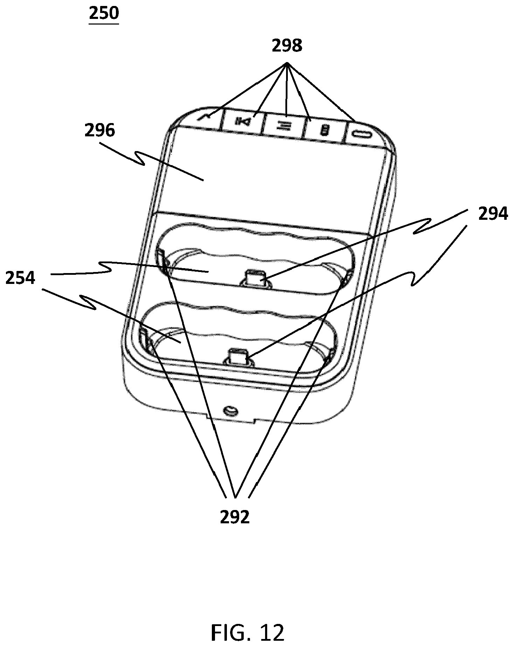

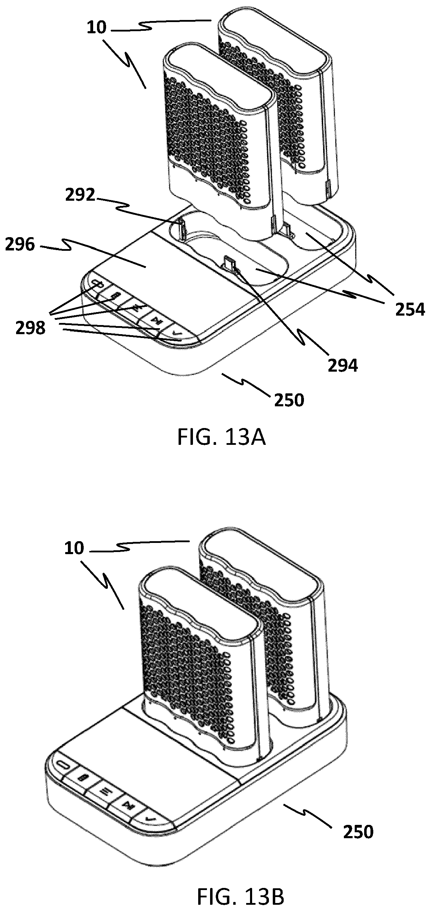

Figure 12 depicts a perspective view of another embodiment of a charger dock 250 in accordance with the present invention, and Figures 13A and13B depict respectively the charger dock 250 before and after receiving battery chargers of Figure 1. The charger dock 250 may comprise a plurality of cavities 254 configured to conform in shape with engagement portions 14 of a plurality of battery chargers 10 for snuggly receiving the plurality of battery chargers to perform electric charging and/or checking status of one or more rechargeable batteries accommodated in the plurality of received battery chargers.

Each of the cavities 254 of the charger dock 250 may comprise one or more interlocking members 292 configured to engageable with the one or more interlocking members 42 of the engagement portions 14 of the battery chargers 10 for preventing movement of the battery chargers 10 inside the cavities 254 of the charger dock 250.

Each of the interlocking members 292 may comprise a protruding feature arranged on an interior wall of the cavity 254 configured to be engageable with a recessing feature positioned on an exterior wall of the engagement portion of the battery charger.

Each of the cavities 254 may preferably comprise an interfacing port 294 arranged at an interior bottom surface of the cavity 254 and configured to be couplable to an interfacing port of the battery charger for supplying power to and exchanging data with the battery charger.

Preferably, the interfacing port 294 of the charger dock 250 may be a micro USB plug, a USB type-C plug, a Lightning plug or any other types of male power and data interfacing port.

The charger dock 250 may further comprise a displaying unit 296 for displaying the battery charging conditions, capacity conditions and operation setting menus; and one or more function keys 298 for facilitating user to select and set up operation modes. The displaying unit may be a liquid crystal display (LCD), a LED display, an organic LED display or any other types of displays which can serve the displaying function in the charger dock.

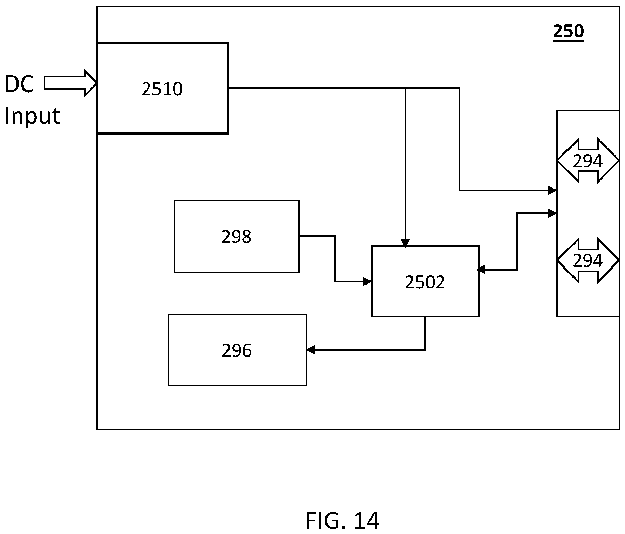

Figure 14 depicts a functional block diagram of the charger dock 250. Similar to the charger dock 150, the charger dock 250 may further comprise a charger dock controller 2502 for controlling the LCD 296 and the one or more function keys 298; and a power supply unit 2510 for receiving DC input and supplying regulated power to the charger dock, as well as the battery chargers via the interfacing ports 294 when the battery chargers are received in the charger dock.

In one embodiment, the charger dock controller 2502 may be configured to receive capacity condition data from the received battery chargers via the corresponding interfacing ports 294 and control the LCD 296 to display the capacity conditions of the batteries accommodated in the corresponding received battery charger. The capacity condition data may include capacity values data and capacity status data of the batteries accommodated in the corresponding received battery charger.

In one embodiment, the charger dock controller 2502 may further be configured to receive battery charger operation status data from the received battery chargers via the interfacing ports 294, control the LCD 296 to display operation status of the received battery chargers.

In one embodiment, the charger dock controller 2502 may further be configured to receive input signals from the function keys 298 being triggered by a user, control the LCD 296 to display the program setting menu in response to the input signals, convert the received input signals to command data, transfer the command data to the battery chargers via the corresponding second interfacing ports 294.

In one embodiment, the function keys 298 may comprise a first key for selecting to perform operation on all of the accommodated batteries simultaneously; a second key for selecting to perform operation on a single accommodated battery; a third key for selecting a function mode to be operated; a fourth key for pausing or resuming operation of a function mode; and a fifth key for confirming selection of a function mode. The function keys 298 are reconfigurable for selecting various functions according to different operation modes of the charger dock and the charger received in the charger dock.

The foregoing description of the present invention has been provided for the purposes of illustration and description. It is not intended to be exhaustive or to limit the invention to the precise forms disclosed. Many modifications and variations will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated.

## Claims

1. A battery charger comprising:
a battery compartment for accommodating one or more batteries; and
an engagement portion extending from the battery compartment along a longitudinal axis of the battery charger and having an exterior shape conforming substantially with a cavity of a charger dock such that the engagement portion can be inserted through a direction along the longitudinal axis of the battery charger into the cavity and snuggly fitted in the cavity for anchoring the battery charger in the charger dock.

2. The battery charger according to claim 1, wherein the engagement portion comprises one or more first interlocking members configured to be engageable with one or more second interlocking members of the cavity of the charger dock for preventing movement of the battery charger inside the cavity of the charger dock.

3. The battery charger according to claim 2, wherein each of the first interlocking members has a recessing feature arranged on an exterior wall of the engagement portion configured to be engageable with a protruding feature position on an interior wall of the cavity of the charger dock.

4. The battery charger according to claim 3, wherein each of the first interlocking members has a groove extending along the longitudinal axis of the battery charger for guiding the protruding feature to engage with the recessing feature.

5. The battery charger according to claim 1, wherein the engagement portion further comprises a first interfacing port configured to be couplable to a second interfacing port at the cavity of the charger dock for receiving power from and exchanging data with the charger dock.

6. The battery charger according to claim 5, wherein the first interfacing port is arranged at an exterior end surface of the engagement portion and configured to have an insertion direction along the longitudinal axis of the battery charger.

7. The battery charger according to claim 6, wherein the first interfacing port of the engagement portion is a female power and data interfacing port.

8. The battery charger according to any one of the preceding claims, further comprising:
a battery charger controller for controlling operation of the battery charger and communicating with the charger dock; and
a self-power supply unit for facilitating the battery charger to be powered by one or more batteries accommodated in the battery charger such that it can perform checking capacities of the accommodated batteries without external power source;

9. The battery charger according to claim 8, further comprising one or more charging units for charging one or more corresponding batteries.

10. The battery charger according to claim 9, further comprising one or more thermal sensing units for sensing temperatures of the one or more corresponding batteries;
wherein the battery charger controller is configured control the charging units to charge the one or more corresponding batteries based on temperatures of the one or more corresponding batteries sensed by the thermal sensing units.

11. The battery charger according to claim 9, further comprising one or more discharging units for discharging the one or more corresponding batteries.

12. The battery charger according to claim 11, wherein the battery charger controller is further configured to control the charging units and discharging units to check capacities of the one or more corresponding batteries;
wherein the battery charger controller is configured to:
control the charging units to charge the one or more corresponding batteries with a small charging current until they are fully charged;
control the discharging units to discharge the one or more corresponding batteries with a discharging current until voltages of the batteries reaching a reference voltage value and record discharging time intervals taken for discharging the batteries and the corresponding battery voltages against time; and
calculate capacity values of the one or more corresponding batteries by integrating the corresponding recorded battery voltages over the corresponding recorded discharging time intervals.

13. The battery charger according to claim 12, the battery charger controller is further configured to transfer the calculated capacity values of the one or more corresponding batteries through the first interfacing port to the charger dock.

14. The battery charger according to claim 12, further comprising one or more indicators arranged adjacent to the battery compartment and a switch arranged adjacent to the one or more indicators;
wherein the battery charger controller is, in response to an input signal from the switch being triggered by a user, further configured to
compare the corresponding recorded battery voltages against a threshold value;
determine the capacity statuses of the accommodated batteries to be a first capacity status if the recorded battery voltages are lower than the threshold value; and
determine the capacity statuses of the accommodated batteries to be a second capacity status if the recorded battery voltages are equal to or higher than the threshold value;
transmit determined battery capacity status data to the indicators to indicate the determined capacity statuses of the corresponding batteries.

15. The battery charger according to claim 14, wherein the one or more indicators are one or more LED indicators controllable to emit light with different colors and flashing rates for representing different charging conditions and/or battery capacity conditions.

16. The battery charger according to claim 9, wherein the battery charger controller is further configured to control the charging units and discharging units to refresh the one or more corresponding batteries;
wherein the battery charger controller is configured to:
control the discharging units to discharge the one or more corresponding batteries with a discharging current until battery voltages reaching a reference voltage value and record discharging time intervals taken for discharging the batteries and the corresponding battery voltages against time;
calculate capacity values of the one or more corresponding batteries by integrating the corresponding recorded battery voltages over the corresponding recorded discharging time intervals; and
control the charging units to fully charge the one or more corresponding batteries.

17. The battery charger according to claim 9, wherein the battery charger controller is further configured to control the charging units and the discharging unit to recover the one or more corresponding batteries;
wherein the battery charger controller is configured to:
a) control the discharging units to discharge the one or more corresponding batteries with a discharging current until battery voltages reaching a reference voltage value;
b) control the charging units to charge the one or more corresponding batteries with a small charging current until they are fully charged;
c) repeat steps a) to b) for a number of cycles.

18. The battery charger according to claim 9, wherein the battery charger controller is further configured to control the charge units to check conditions of one or more accommodated batteries and fully charge the one or more accommodated batteries if the accommodated batteries are determined to be rechargeable;
wherein the battery charger controller is configured to:
control the charging units to charge the one or more corresponding batteries with a small charging current and monitor one or more corresponding battery voltages for a conditioning charge time;
determine the one or more corresponding batteries to be rechargeable if the corresponding battery voltages reach a reference voltage within the conditioning charge time;
determine the one or more corresponding batteries to be nonchargeable if the corresponding battery voltages do not reach the predefined voltage within the conditioning charge time;
fully charge the one or more corresponding batteries if they are determined to be rechargeable.

19. The battery charger according to claim 18, the battery charger controller is further configured to transfer the checked condition of the one or more corresponding batteries through the first interfacing port to the charger dock.

20. The battery charger according to claim 18, further comprising one or more indicators arranged adjacent to the battery compartment and a switch arranged adjacent to the one or more indicators;
wherein the battery charger controller is further configured to transmit checked condition data to the indicators to indicate the checked conditions of the corresponding batteries.

21. A charger dock comprising:
one or more cavities configured to conform in shape with respective engagement portions of one or more battery chargers for snuggly receiving the battery chargers to perform electric charging and/or checking status of one or more batteries accommodated in the one or more received battery chargers.

22. The charger dock according to claim 21, wherein each of the cavities comprises one or more second interlocking members configured to engageable with one or more first interlocking members of the engagement portion of the battery charger for preventing movement of the battery charger inside the cavity of the charger dock.

23. The charger dock according to claim 22, each of the second interlocking members has a protruding feature arranged on an interior wall of the cavity configured to be engageable with a recessing feature position on an exterior wall of the engagement portion of the battery charger.

24. The charger dock according to claim 21, further comprising one or more second interfacing ports, each arranged at an interior bottom surface of the corresponding cavity and configured to be couplable to a corresponding first interfacing port of the battery charger for supplying power to and exchanging data with the battery charger.

25. The charger dock according to claim 24, wherein the one or more second interfacing ports are male power and data interfacing ports

26. The charger dock according to any one of claims 21 to 25, further comprising:
a displaying unit for displaying battery charging conditions, capacity conditions and operation setting menus;
one or more function keys for facilitating a user to select and set up operation modes;
a power supply unit for receiving DC input and supplying regulated power to the charger dock and one or more battery chargers via the one or more corresponding second interfacing ports when the one or more battery chargers are received in the charger dock; and
a charger dock controller configured to:
receive capacity condition data from the one or more received battery chargers via the one or more corresponding second interfacing ports and control the displaying unit to display the capacity conditions of the batteries accommodated in the corresponding received battery charger;
receive battery charger operation status data from the one or more received battery charger via the one or more corresponding second interfacing port, control the LCD to display operation status of the corresponding received battery charger; or
receive input signals from the function keys being triggered by a user and control the displaying unit to display the operation setup menu in response to the input signals, and convert the input signals to command data, transfer the command data to the battery charger via the one or more corresponding second interfacing ports.
